# EUROPEAN PATENT APPLICATION

(11) **EP 3 163 851 A1**
(43) Date of publication of application: **03.05.2017**
(21) Application number: 14878395.4
(22) Date of filing: 05.09.2014
(51) Int. Cl.: H04M 1/725, G06F 21/32

(54) **USER MODE CONTROL METHOD AND SYSTEM BASED ON IRIS RECOGNITION TECHNOLOGY FOR MOBILE TERMINAL**

(30) Priority: 30.06.2014 CN 201410302305
(71) Applicant: Huizhou TCL Mobile Communication Co., Ltd., Huizhou, Guangdong 516006 (CN)
(72) Inventor: SHI, Zhen, Huizhou Guangdong 516006 (CN)
(74) Representative: Petraz, Gilberto Luigi
(86) International application number: PCT/CN2014/085980
(87) International publication number: WO 2016/000311

(57) **Abstract**

The present invention discloses a user mode control method and system based on an iris recognition technology for a mobile terminal. The user mode control method comprises steps of acquiring iris feature data of a user and determining whether or not the acquired iris feature data matches iris data stored in a database; unlocking the mobile terminal if they match with each other; and inquiring the user to trigger a private mode or an ordinary mode and controlling a login mode of an application program according to the corresponding user mode after the mobile terminal is unlocked. The present invention improves data security of the mobile terminal, and the operation is simple.

## Description

### TECHNICAL FIELD OF THE INVENTION

The present invention relates to a user mode control technology for a mobile terminal, and more particularly to a user mode control method and system based on an iris recognition technology for a mobile terminal.

### BACKGROUND OF THE INVENTION

Mobile terminals such as smart phones have more and more functions and application programs, and more and more information and virus may be included therein. People use them to pay the bill, take private photographs, talk to each other, and the like. Such private activities are taken more frequently and thus are accompanied with the security problems, for example, a user's bankcard may be stolen and used by someone, private photographs may be inadvertently perceived, and chat sessions may be inadvertently perceived by others.

In addition, when a user logs in an application program (e.g., APPlication, APP) for the first time, or logs out and needs to logs in again, it is required for a user to input a username and password. The user can enter a user interface of the application program only after the password is authenticated. Such an operation is more complicated. If the user does not log out the application program after the login, other people knowing the unlocking password of the cell phone can directly log in the application program without the use of an account. There exists security problems in such a situation.

### SUMMARY OF THE INVENTION

Considering the above drawbacks existing in the conventional skills, the objective of the present invention is to provide a user mode control method and system based on an iris recognition technology for a mobile terminal, for solving the problems of insecure data of the mobile terminal and complicated operations on application program login existing in the conventional skills.

To achieve the above objective, the present invention adopts the following technical schemes.

A user mode control method and system based on an iris recognition technology for a mobile terminal is provided, which comprises steps of acquiring iris feature data of a user and determining whether or not the acquired iris feature data matches iris data stored in a database; unlocking the mobile terminal when the acquired iris feature data matches the iris data stored in the database; inquiring the user to trigger a private mode or an ordinary mode after the mobile terminal is unlocked; automatically logging in an application program with identity authentication by use of the iris feature data when the user wants to log in the application program at the time the private mode is triggered; inquiring the user to use an iris authentication mode or a password authentication mode for the identity authentication when the user wants to log in the application program at the time the ordinary mode is triggered; prompting the user to enter an unlocking password when the acquired iris feature data does not match the iris data stored in the database; and unlocking the mobile terminal and triggering the mobile terminal to enter the ordinary mode when the unlocking password is authenticated.

When the iris authentication mode is triggered, the user mode control method further comprises a step of acquiring the iris feature data of the user and automatically logging in the application program when the acquired iris feature data matches the iris data stored in the database.

When the password authentication mode is triggered, the user mode control method further comprises a step of prompting the user to input a username and password and logging in the application program when the username and password are authenticated.

A user mode control method based on an iris recognition technology for a mobile terminal is provided, which comprises steps of acquiring iris feature data of a user and determining whether or not the acquired iris feature data matches iris data stored in a database; unlocking the mobile terminal when the acquired iris feature data matches the iris data stored in the database; and inquiring the user to trigger a private mode or an ordinary mode and controlling a login mode of an application program according to the corresponding user mode after the mobile terminal is unlocked, wherein the login mode comprises a private mode automatic login and an ordinary mode authentication login.

The user mode control method further comprises steps of prompting the user to enter an unlocking password when the acquired iris feature data does not match the iris data stored in the database; and unlocking the mobile terminal and triggering the mobile terminal to enter the ordinary mode when the unlocking password is authenticated.

The step of inquiring the user to trigger a private mode or an ordinary mode and controlling a login mode of an application program according to the corresponding user mode after the mobile terminal is unlocked comprises steps of: inquiring the user to trigger the private mode or the ordinary mode after the mobile terminal is unlocked; automatically logging in the application program with identity authentication by use of the iris feature data when the user wants to log in the application program at the time the private mode is triggered; and prompting the user to use an iris authentication mode or a password authentication mode for the identity authentication when the user wants to log in the application program at the time the ordinary mode is triggered.

When the iris authentication mode is triggered, the user mode control method further comprises a step of acquiring the iris feature data of the user and automatically logging in the application program when the acquired iris feature data matches the iris data stored in the database.

When the password authentication mode is triggered, the user mode control method further comprises a step of prompting the user to input a username and password and logging in the application program when the username and password are authenticated.

A user mode control system based on an iris recognition technology for a mobile terminal is provided, which comprises an iris data collecting module for acquiring iris feature data of a user; an iris data determining module for determining whether or not the acquired iris feature data matches iris data stored in a database; and a control module for unlocking the mobile terminal when the acquired iris feature data matches the iris data stored in the database; and inquiring the user to trigger a private mode or an ordinary mode and controlling a login mode of an application program according to the corresponding user mode after the mobile terminal is unlocked, wherein the login mode comprises a private mode automatic login and an ordinary mode authentication login.

The control module is further utilized for prompting the user to enter an unlocking password when the acquired iris feature data does not match the iris data stored in the database; and unlocking the mobile terminal and triggering the mobile terminal to enter the ordinary mode when the unlocking password is authenticated.

The control module comprises an inquiring unit for inquiring the user to trigger the private mode or the ordinary mode after the mobile terminal is unlocked; an identity authentication unit for automatically logging in the application program with identity authentication by use of the acquired iris feature data when the user wants to log in the application program at the time the private mode is triggered; and inquiring the user to use an iris authentication mode or a password authentication mode for the identity authentication when the user wants to log in the application program at the time the ordinary mode is triggered.

The identity authentication unit is further utilized for controlling the iris data collecting module to acquire the iris feature data of the user when the iris authentication mode is triggered, and automatically logging in the application program when the collected iris feature data matches the iris data stored in the database.

The inquiring unit is further utilized for prompting the user to input a username and password when the password authentication mode is triggered, and the identity authentication unit is further utilized for logging in the application program when the username and password are authenticated.

The user mode control system further comprises an iris data function interface for providing an iris data function for identity authentication in logging in the application program in the private mode.

The identity authentication unit is further utilized for identity authentication for each time logging in the application program with a prompt of username and password when the acquired iris feature data does not match the iris data stored in the database.

Compared to the conventional skills, the mobile terminal user mode control method and system based on the iris recognition technology provided in the present invention acquires iris feature data of a user and determines whether or not the acquired iris feature data matches iris data stored in a database; unlocks the mobile terminal when the acquired iris feature data matches the iris data stored in the database; and inquires the user to trigger a private mode or an ordinary mode and controlling a login mode of an application program according to the corresponding user mode after the mobile terminal is unlocked, where the login mode comprises a private mode automatic login and an ordinary mode authentication login. By use of the iris recognition technology for mobile terminal unlocking, the present invention improves data security of the mobile terminal, the way of application program login can be set as an automatic login or an authentication login to log in the application program, and the operation is simple. A user having an unlocking password can also use his/her username and password to log in an application program on the mobile terminal, and the operation is convenient.

### BRIEF DESCRIPTION OF THE DRAWINGS

FIG. 1 is a flow chart of a user mode control method based on an iris recognition technology for a mobile terminal in accordance with an embodiment of the present invention.
FIG. 2 is a structural diagram showing a user mode control system based on an iris recognition technology for a mobile terminal in accordance with an embodiment of the present invention.

### DETAILED DESCRIPTION OF THE INVENTION

The iris recognition technology is a development trend of mobile terminal user identification in the future. More and more mobile device developers are focusing on iris technology and devote a large amount of material resources to develop such a function due to the uniqueness, stability, and invariance of this technology. The iris recognition technology and the mobile devices can be perfectly combined. The present invention provides a user mode control method and system based on the iris recognition technology for the mobile terminal. The mobile terminal is unlocked by use of iris feature data. A mobile terminal unlocking operation and login operation of application programs are accomplished as long as a user picks up the mobile terminal and scans his/her eyeballs.

To make the objectives, technical solutions, and effects of the present invention more clear and specific, the present invention is described in further detail below with reference to embodiments in accompanying with drawings. It should be understood that the specific embodiments described herein are merely for explaining the present invention and are not intended to limit the present invention.

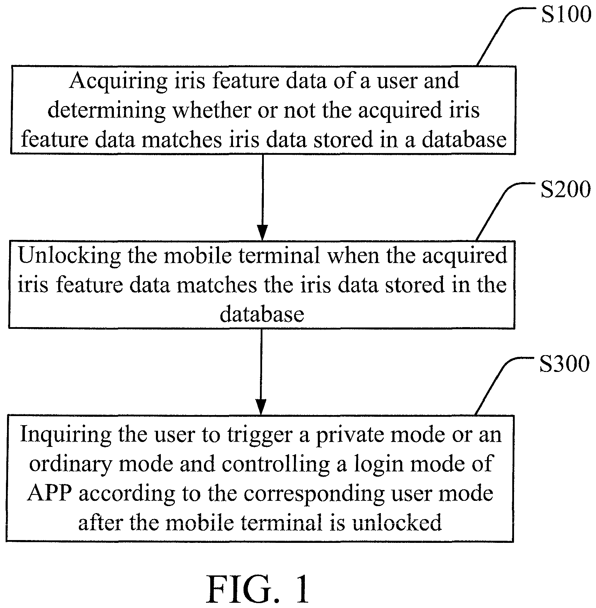

Please refer to FIG. 1. A mobile terminal user mode control method provided in an embodiment of the present invention according to the iris recognition technology comprises the following steps.

In Step S100, iris feature data of a user is acquired, and whether or not the acquired iris feature data matches iris data stored in a database is determined.

In Step S200, a mobile terminal is unlocked when the acquired iris feature data matches the iris data stored in the database.

In Step S300, after the mobile terminal is unlocked, the user is inquired to trigger a private mode or an ordinary mode, and a login mode of application programs is controlled according to the corresponding user mode, where the login mode comprises a private mode automatic login and an ordinary mode authentication login.

By use of the iris recognition technology for screen unlocking, the present invention prevents personal information from loss caused by loss of a mobile terminal and avoids major economic losses. After the mobile terminal is unlocked, two different kinds of user modes, for example, a private mode and an ordinary mode, are provided to the user. The feature of the private mode is that the user automatically logs in the application programs running on the device without having to be authenticated (with a username and password) again. Meanwhile, the application programs perform automatic login and authentication with the use of the iris data in the background. The feature of the ordinary mode is that each application program listed on a primary menu of the mobile terminal has to perform identity authentication. It can be selected from a general form of username and password or a scanned iris form for the logins.

The afore-mentioned steps are further described with specific embodiments as follows.

Step S100 is to collect iris feature data of a user and match the collected iris feature data of the user with iris data stored in a database. The mobile terminal is a cell phone. The cell phone may have a Myris iris scan device disposed thereon, which can scan 240 key points on the user's iris and then generate a 2048 bit digital signature. After the iris feature data are collected, identification is performed by use of the iris recognition technology. The iris recognition technology has been widely used in attendance devices, access control devices, and so on, and therefore it is deemed as a conventional skill and is not detailed herein.

In a situation that the collected iris feature data of the user does not match the iris data stored in the database, the user (e.g., the family of an owner of the cell phone), however, knows the unlocking password of the cell phone and wants to use the cell phone. In Step S200, in order to be able to be used by the user who knows the password, the mobile terminal user mode control method based on the iris recognition technology in accordance with the present invention further comprises steps of prompting the user to input an unlocking password when the collected iris feature data does not match the iris data stored in the database; and unlocking the mobile terminal and triggering the mobile terminal to enter the ordinary mode when the unlocking password is authenticated. After the mobile terminal is operated in the ordinary mode, related operations such as viewing Web pages and playing video games can run on the mobile terminal. However, private application programs such as QQ, WeChat, and Alipay need logins with username and password. In such a manner, the mobile terminal may be lent to the user who knows the unlocking password without leakage of the privacy of individuals.

After succeeding in unlocking with use of iris data, the mobile terminal automatically enters a user mode selection interface. Meanwhile, the user interface displays a private mode option button and an ordinary mode option button for the user. Specifically, Step S300 comprises steps of inquiring the user to trigger the private mode or the ordinary mode after the mobile terminal is unlocked (first step); automatically logging in an application program with identity authentication by use of the iris feature data when the user wants to log in the application program at the time the private mode is triggered (second step); and inquiring the user to use an iris authentication mode or a password authentication mode for the identity authentication when the user wants to log in the application program at the time the ordinary mode is triggered (third step).

In the aforesaid second step, when the user selects the private mode, the mobile terminal will use the collected iris feature data for user identity authentication to log in application programs. Meanwhile, the application programs can automatically call the functions related to the iris feature data for automatic login.

When the user selects the ordinary mode, the identity authentication in the third step requires detecting the identity authentication type selected by the user. When the iris authentication mode is triggered, it is required to acquire the iris feature data of the user, and automatically logging in the application program(s) is successfully completed when the acquired iris feature data matches the iris data stored in the database. When the password authentication mode is triggered, the user is prompted to enter a username and password and logging in the application program is successfully completed when the username and password are authenticated.

In order to improve data security of the mobile terminal, identity authentication is required for each time logging in the application programs. When a person having the unlocking password is not an owner of the mobile terminal, that person is prevented from logging in the application programs by use of the accounts of the owner.

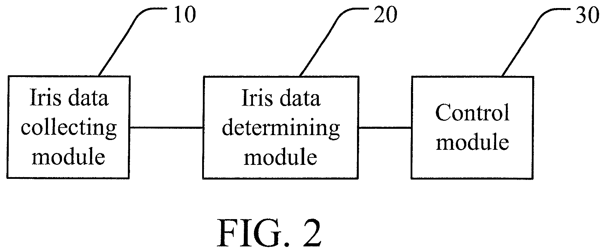

Correspondingly, the present invention further provides a user mode control system based on the iris recognition technology for a mobile terminal, which comprises an iris data collecting module 10, an iris data determining module 20, and a control module 30 as shown in FIG. 2.

The iris data collecting module 10 is a Myris iris scan device disposed on the front face of the mobile terminal's main body and is utilized for acquiring iris feature data of a user. The iris data determining module 20 is utilized for determining whether or not the acquired iris feature data matches iris data stored in a database. The control module 30 is utilized for unlocking the mobile terminal when the acquired iris feature data matches the iris data stored in the database, and inquiring the user to trigger a private mode or an ordinary mode and controlling a login mode of application programs according to the corresponding user mode after the mobile terminal is unlocked, where the login mode comprises private mode automatic login and ordinary mode authentication login. Please refer to the above-described embodiments for details.

In order to be able to be used by a user who knows the unlocking password but is not an owner of the mobile terminal, the control module 30 is further utilized for prompting the user to input an unlocking password when the acquired iris feature data does not match the iris data stored in the database; and unlocking the mobile terminal and triggering the mobile terminal to enter the ordinary mode when the unlocking password is authenticated. Please refer to the above-described embodiments for details.

In a specific embodiment, the control module 30 comprises an iris data function interface, an inquiring unit, and an identity authentication unit.

The iris data function interface provides an iris data function for identity authentication in logging in application programs in the private mode. In the private mode, a permission to call the iris data function is granted for all of the respective application programs installed on the mobile terminal. When an application program is started, the application program can automatically call the iris data function for proceeding with automatic identity authentication and login.

The inquiring unit is utilized for inquiring the user to trigger the private mode or the ordinary mode after the mobile terminal is unlocked. The identity authentication unit is utilized for automatically logging in an application program with identity authentication by use of the iris feature data when the user wants to log in the application program at the time the private mode is triggered; and inquiring the user to use an iris authentication mode or a password authentication mode for the identity authentication when the user wants to log in the application program at the time the ordinary mode is triggered. Please refer to the above-described embodiments for details.

Furthermore, when the iris authentication mode is triggered, the identity authentication unit is further utilized for controlling the iris data collecting module 10 to acquire the iris feature data of the user and automatically logging in the application program(s) when the acquired iris feature data matches the iris data stored in the database.

When the password authentication mode is triggered, the inquiring unit is further utilized for prompting the user to enter a username and password and the identity authentication unit is further utilized for logging in the application program when the username and password are authenticated. Such an identity authentication is a conventional skill and is not detailed herein.

In addition, the identity authentication unit is further utilized for identity authentication for each time logging in the application programs with a prompt of username and password when the acquired iris feature data does not match the iris data stored in the database.

The mobile terminal user mode control system based on the iris recognition technology provided in the embodiments of the present invention is formed in a terminal such as a computer, a tablet computer, and a cell phone. The mobile terminal user mode control method based on the iris recognition technology provided in the above-described embodiments and the mobile terminal user mode control system based on the iris recognition technology belong to the same concept. The mobile terminal user mode control system based on the iris recognition technology can run any method provided in the embodiments of the mobile terminal user mode control method based on the iris recognition technology, and implementation thereof is referred to the embodiments of the mobile terminal user mode control method based on the iris recognition technology and is not detailed herein.

As to the mobile terminal user mode control method based on the iris recognition technology provided in the embodiment of the present invention, it should be understood for an ordinary person in this field that partial or full processes carrying out the mobile terminal user mode control method based on the iris recognition technology provided in the embodiment of the present invention can be accomplished by related hardware instructed by a computer program. The computer program can be stored in a computer readable storage medium such as a memory in a terminal and is executed by at least one processor in the terminal. The computer program may include the processes of the embodiments of the above methods in the execution process. The storage medium can be a disk, an optical disc, a read-only memory (ROM), or a random access memory (RAM), etc.

As to the mobile terminal user mode control system based on the iris recognition technology provided in the embodiment of the present invention, the respective functional modules can be integrated into one processing chip, or each of the modules may exist alone physically, or else two or more than two modules are integrated into one module. The afore-mentioned integrated module can be implemented in a form of hardware or a form of software functional modules. When the integrated module is implemented in the form of software functional modules and sold or used as an independent product, the integrated module may be stored in a computer-readable storage medium such as a read-only memory, a disk, or an optical disc.

Above all, by use of the iris recognition technology for screen unlocking, the present invention prevents personal information from loss caused by loss of a mobile terminal and avoids major economic losses. After the mobile terminal is unlocked, two different types of user modes are provided to the user, the user can select an automatic login or an authentication login to log in the application programs, and the operation is simple. A user having an unlocking password can also use his/her username and password to log in an application program on the mobile terminal, and the operation is convenient.

It can be understood that a person of ordinary skill in this field can always make equivalent replacements or alterations based on the invention concepts and the technical solutions of the present invention. However, all of these alterations or replacements should be within the scope as defined in the appended claims of the present invention.

## Claims

1. A user mode control method based on an iris recognition technology for a mobile terminal, comprising:
acquiring iris feature data of a user and determining whether or not the acquired iris feature data matches iris data stored in a database;
unlocking the mobile terminal when the acquired iris feature data matches the iris data stored in the database;
inquiring the user to trigger a private mode or an ordinary mode after the mobile terminal is unlocked;
automatically logging in an application program with identity authentication by use of the iris feature data when the user wants to log in the application program at the time the private mode is triggered;
inquiring the user to use an iris authentication mode or a password authentication mode for the identity authentication when the user wants to log in the application program at the time the ordinary mode is triggered;
prompting the user to enter an unlocking password when the acquired iris feature data does not match the iris data stored in the database; and
unlocking the mobile terminal and triggering the mobile terminal to enter the ordinary mode when the unlocking password is authenticated.

2. The user mode control method according to Claim 1, wherein when the iris authentication mode is triggered, the user mode control method further comprises a step of acquiring the iris feature data of the user and automatically logging in the application program when the acquired iris feature data matches the iris data stored in the database.

3. The user mode control method according to Claim 1, wherein when the password authentication mode is triggered, the user mode control method further comprises a step of prompting the user to input a username and password and logging in the application program when the username and password are authenticated.

4. A user mode control method based on an iris recognition technology for a mobile terminal, comprising:
acquiring iris feature data of a user and determining whether or not the acquired iris feature data matches iris data stored in a database;
unlocking the mobile terminal when the acquired iris feature data matches the iris data stored in the database; and
inquiring the user to trigger a private mode or an ordinary mode and controlling a login mode of an application program according to the corresponding user mode after the mobile terminal is unlocked, wherein the login mode comprises a private mode automatic login and an ordinary mode authentication login.

5. The user mode control method according to Claim 4, further comprising:
prompting the user to enter an unlocking password when the acquired iris feature data does not match the iris data stored in the database; and
unlocking the mobile terminal and triggering the mobile terminal to enter the ordinary mode when the unlocking password is authenticated.

6. The user mode control method according to Claim 4, wherein the step of inquiring the user to trigger a private mode or an ordinary mode and controlling a login mode of an application program according to the corresponding user mode after the mobile terminal is unlocked comprises steps of:
inquiring the user to trigger the private mode or the ordinary mode after the mobile terminal is unlocked;
automatically logging in the application program with identity authentication by use of the iris feature data when the user wants to log in the application program at the time the private mode is triggered; and
inquiring the user to use an iris authentication mode or a password authentication mode for the identity authentication when the user wants to log in the application program at the time the ordinary mode is triggered.

7. The user mode control method according to Claim 6, wherein when the iris authentication mode is triggered, the user mode control method further comprises a step of acquiring the iris feature data of the user and automatically logging in the application program when the acquired iris feature data matches the iris data stored in the database.

8. The user mode control method according to Claim 6, wherein when the password authentication mode is triggered, the user mode control method further comprises a step of prompting the user to input a username and password and logging in the application program when the username and password are authenticated.

9. A user mode control system based on an iris recognition technology for a mobile terminal, comprising:
an iris data collecting module for acquiring iris feature data of a user;
an iris data determining module for determining whether or not the acquired iris feature data matches iris data stored in a database; and
a control module for unlocking the mobile terminal when the acquired iris feature data matches the iris data stored in the database; and inquiring the user to trigger a private mode or an ordinary mode and controlling a login mode of an application program according to the corresponding user mode after the mobile terminal is unlocked, wherein the login mode comprises a private mode automatic login and an ordinary mode authentication login.

10. The user mode control system according to Claim 9, wherein the control module is further utilized for prompting the user to enter an unlocking password when the acquired iris feature data does not match the iris data stored in the database; and unlocking the mobile terminal and triggering the mobile terminal to enter the ordinary mode when the unlocking password is authenticated.

11. The user mode control system according to Claim 9, wherein the control module comprises:
an inquiring unit for inquiring the user to trigger the private mode or the ordinary mode after the mobile terminal is unlocked;
an identity authentication unit for automatically logging in the application program with identity authentication by use of the acquired iris feature data when the user wants to log in the application program at the time the private mode is triggered; and inquiring the user to use an iris authentication mode or a password authentication mode for the identity authentication when the user wants to log in the application program at the time the ordinary mode is triggered.

12. The user mode control system according to Claim 11, wherein the identity authentication unit is further utilized for controlling the iris data collecting module to acquire the iris feature data of the user when the iris authentication mode is triggered, and automatically logging in the application program when the collected iris feature data matches the iris data stored in the database.

13. The user mode control system according to Claim 11, wherein the inquiring unit is further utilized for prompting the user to input a username and password when the password authentication mode is triggered, and the identity authentication unit is further utilized for logging in the application program when the username and password are authenticated.

14. The user mode control system according to Claim 9, further comprising:
an iris data function interface for providing an iris data function for identity authentication in logging in the application program in the private mode.

15. The user mode control system according to Claim 12, wherein the identity authentication unit is further utilized for identity authentication for each time logging in the application program with a prompt of username and password when the acquired iris feature data does not match the iris data stored in the database.
